# EUROPÄISCHE PATENTSCHRIFT

(11) **EP 1 077 835 B1**
(45) Veröffentlichungstag und Bekanntmachung des Hinweises auf die Patenterteilung: **02.10.2002**
(21) Anmeldenummer: 99919013.5
(22) Anmeldetag: 12.05.1999
(51) Int. Cl.: B60R 13/08

(54) **AKUSTISCH WIRKSAMES FAHRZEUGBAUTEIL**
ACOUSTIC INSULATING VEHICLE COMPONENT
ELEMENT D'ISOLATION ACOUSTIQUE POUR VEHICULE

(30) Priorität: 12.05.1998 CH 105098
(43) Veröffentlichungstag der Anmeldung: 28.02.2001
(73) Patentinhaber: RIETER AUTOMOTIVE (INTERNATIONAL) AG, 8702 Zollikon (CH)
(72) Erfinder: ALTS, Thorsten, D-64401 Gross-Bieberau (DE); MARSCH, Ralf, Peter, D-64380 Rossdorf (DE); ERDKAMP, Marzell, D-64397 Modautal (DE); BONNA, Edmund, FL-9495 Triesen (LI)
(74) Vertreter: Graf, Seifert & Partner
(86) Internationale Anmeldenummer: CH9900202
(87) Internationale Veröffentlichungsnummer: WO99058371

(56) Entgegenhaltungen:
- EP-A- 0 636 517
- EP-A- 0 680 866
- WO-A-98/18657
- DE-A- 3 800 740
- GB-A- 2 216 081
- US-A- 4 099 590
- US-A- 5 464 952
- US-A- 5 483 028
- US-A- 5 681 072

## Beschreibung

Die vorliegende Erfindung betrifft ein Fahrzeugbauteil gemäss Oberbegriff des Anspruchs 1 sowie eine Aussenverkleidung dafür.

Es ist bekannt, das Bodenblech eines Fahrzeugs mit einer akustisch wirksamen, d.h., schallisolierenden und/oder schallabsorbierenden Innenverkleidung auszurüsten. In der Regel weist eine solche Verkleidung eine schallisolierende Dämpfungsschicht auf, welche direkt auf das Bodenblech aufgelegt oder aufgeklebt ist. Bei Fahrzeugen mit höherem Komfort wird auf diese schwingungsdämpfende und schallisolierende Schicht noch eine schallabsorbierende Schaum- oder Faservliesschicht und eine schwere und luftdichte Teppichschicht aufgebracht. Diese zusätzlichen Schichten sind akustisch derart aufeinander abgestimmt, dass diese als akustisches Feder-Masse-System miteinander wechselwirken können. Es ist auch bekannt, auf die Aussenseite des Bodenblechs eine Schutzschicht anzubringen. Mit dieser Schutzschicht soll das Bodenblech mechanisch und/oder chemisch, bspw. vor Steinschlägen oder Strassensalz, geschützt werden. Natürlich trägt diese Schutzschicht, im folgenden auch Unterbodenschutz genannt, dazu bei, die Vibrationen des Bodenblechs zusätzlich zu dämpfen.
Als Unterbodenschutz wird in der Regel eine ca. 1mm dicke und relativ teure PVC-Schicht aufgespritzt. Eine solche Schicht führt zu einer Gewichtszunahme von ca. 1 - 1.5 kg/m² und setzt beim Rezyklieren unerwünscht viel Chlor frei.

Es zeigt sich, dass die Vielzahl auf oder am Bodenblech angebrachten Schichten und Beschichtungen mit unterschiedlichen Funktionen das Gesamtgewicht des Fahrzeugs in unerwünschter Weise erhöhen und den Fahrgastraum, insbesondere den Fussraum in unerwünschter Weise reduzieren. Das generelle Bestreben der modernen Fahrzeugindustrie ist es jedoch, die Fahrzeuge leichter, geräumiger und kostengünstiger gestalten zu können.

Ein gattungs gemässes Fahrzeugbauteil ist aus EP-A-0 680 866 behannt.

Es ist deshalb Aufgabe der vorliegenden Erfindung, ein Fahrzeugbauteil zu schaffen, welches es erlaubt, den Fussraum des Fahrzeugs ohne Einbusse an akustischer Wirksamkeit geräumiger gestalten zu können.
Darüber hinaus soll ein Fahrzeugbauteil geschaffen werden, das gegenüber herkömmlichen Fahrzeugboden-Konfigurationen leichter und kostengünstiger ist und insbesondere keine besonderen Entsorgungsprobleme aufwirft.

Diese Aufgabe wird erfindungsgemäss mit einem Fahrzeugbauteil gemäss Anspruch 1 gelöst, sowie mit einer Aussenverkleidung gemäss Anspruch 13, und insbesondere dadurch, dass an der Aussenseite des Karosserieteils ein von diesem beabstandetes, versteifendes Schild angebracht ist, welches zusammen mit dem Karosserieteil eine Doppelbodenstruktur bildet. Diese Doppelbodenstruktur wirkt schallisolierend und kann mit weiteren schallisolierenden und/oder schallabsorbierenden Elementen kombiniert werden.

In einer bevorzugten Weiterbildung des erfindungsgemässen Fahrzeugbauteils ist in dem Zwischenraum des Doppelbodens eine Schaumschicht, insbesondere ein Weichschaum eingefügt, welcher vorzugsweise an seiner dem Karosserieteil zugewandten Seite mit einem Profil versehen ist. Derartige profilierte, dissipativ wirkende Schichten sind bspw. aus der EP 0 474 593 bekannt (welche hiermit vollumfänglich als Bestandteil dieser Anmeldung aufgenommen werden soll) und liegen lose an dem Karosserieteil an und bedämpfen die Karosserieschwingungen. Dazu sind der Weichschaum und der Doppelboden derart dimensioniert, dass der profilierte Weichschaum vom Schild des Doppelbodens an das Karosserieteil angedrückt wird.

In einer weiteren bevorzugten Ausbildung des erfindungsgemässen Fahrzeugbauteils ist der Doppelboden mit einem ultraleichten Absorptionspaket bekannter Art (bspw. gemäss WO98/18657) kombiniert. Dieses weist anstelle einer Schwerschicht eine mikroporöse Versteifungsschicht auf. Bei dieser Ausführungsform kann sowohl auf die schallisolierende, bituminöse Dämpfungsschicht im Fahrzeuginnern, als auch auf die Schwerschicht des Feder-Masse-Systems der Innenverkleidung verzichtet werden.

Damit wird ein akustisch wirksames Fahrzeugbauteil geschaffen, welches erheblich leichter ist als konventionelle Systeme und im Innenbereich des Fahrzeugs eine geringere Dicke aufweist. Es versteht sich, dass bei geeigneter Kombination des erfindungsgemässen Doppelbodens mit schallisolierenden und/oder schallabsorbierenden Systemen bekannter Art, die akustische Wirksamkeit weiter verbessert werden kann.

Bevorzugte Weiterbildungen sind durch die Merkmale der Unteransprüche definiert.

Im folgenden soll die Erfindung anhand von Ausführungsbeispielen und mit Hilfe der Figuren näher erläutert werden. Dabei zeigen:
- Fig. 1: schematische Darstellung eines konventionellen Fahrzeugbodens;
- Fig. 2: schematische Darstellung eines erfindungsgemässen Fahrzeugbauteils;
- Fig. 3: schematische Darstellung einer Weiterbildung des erfindungsgemässen Fahrzeugbauteils;
- Fig. 4: Diagramm zur akustischen Wirksamkeit verschieden ausgerüsteter Fahrzeugbauteile.

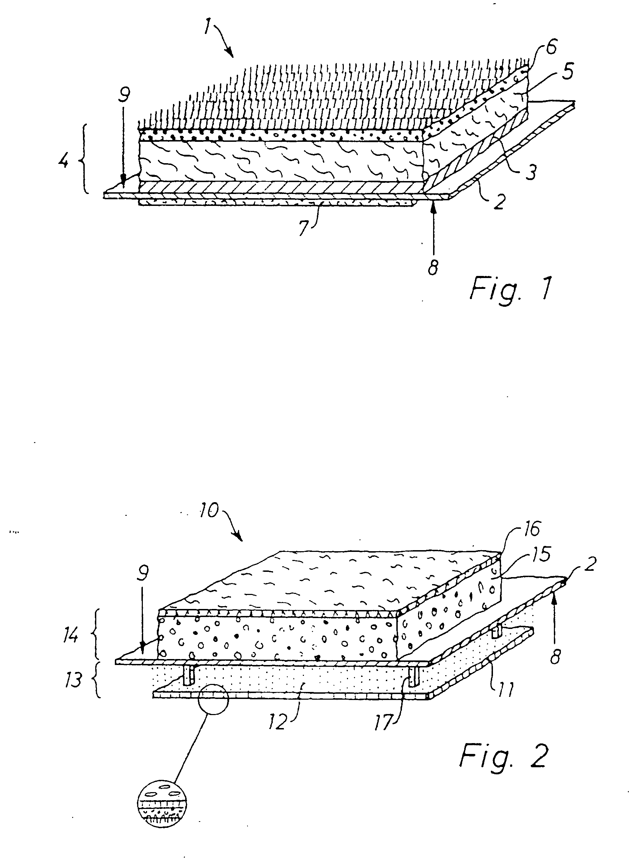

Der in Figur 1 dargestellte Fahrzeugboden 1 zeigt einen konventionellen Aufbau. Dabei ist auf der Innenseite des Bodenblechs 2, beispielsweise ein ca. 0.8 mm dünnes Stahlblech, eine bituminöse Dämpfungsschicht 3 aufgebracht. Diese Dämpfungsschicht 3 weist in der Regel ein Gewicht von ca. 2.3 kg/m² auf und wird aufgeklebt. Auf diese Dämpfungsschicht 3 wird je nach Fahrzeugausstattung ein mehr oder weniger schweres, schallabsorbierendes Feder-Masse-System 4 aufgebracht, dessen Federschicht 5 aus einem ca. 20 mm dicken Faservlies, einem offenporigen Schaum oder einem Schaumflockenvlies (KFF) besteht und dessen Masseschicht 6 aus einer ca. 3.2 kg/m² schweren Schwerschicht (EPDM), oder einer entsprechenden Dekor- oder Teppichschicht besteht. An seiner Aussenseite 8 weist das Bodenblech 2 eine ca. 1 mm dicke Unterbodenbeschichtung 7 auf, die in der Regel aus aufgespritzem PVC besteht. Das Gesamtgewicht des an einem solchen Fahrzeugboden 1 angebrachten akustisch wirksamen Aufbaus beträgt damit mindestens 8.0 kg/m².

Demgegenüber zeigt Figur 2 ein erfindungsgemäss ausgerüstetes Fahrzeugbauteil 10. In seiner einfachsten Ausführungsform weist dieses ein von der Aussenseite 8 des Bodenblechs 2 beabstandetes Schild 11 auf und bildet zusammen mit dem Bodenblech 2 einen Doppelboden 13. Der zwischen dem Bodenblech 2 und dem Schild 11 liegende Zwischenraum weist bei dieser einfachen Ausführungsform eine Dicke von einigen Millimetern, insbesondere 5 - 15 mm auf, und ist lediglich mit Luft gefüllt. In einer bevorzugten Ausführungsform ist dieser Zwischenraum mit einer schallisolierenden und/oder schallabsorbierenden Zwischenschicht 12 gefüllt. Geeignete Materialien für diese Zwischenschicht sind offenporig und dem Fachmann hinlänglich bekannt. Um das Schild 11 mit dem Karosserieteil 2 zu verspannen, sind geeignete Mittel 17 vorgesehen. Diese Mittel können alle heutzutage gängigen Verbindungstechniken umfassen, beispielsweise Verschrauben, Verclipsen, etc. und können insbesondere die bei Fahrzeugen üblicherweise angebrachten Schweissbolzen verwenden. Das Karosserieteil 2 besteht aus einem konventionellen Karosserieblech, bspw. aus einem 0.8 mm dünnen Stahlblech, während der Schild 11 in einer bevorzugten Ausführungsform aus einem 0.5 mm bis 3.00 mm, vorzugsweise 1.0 mm bis 2.4 mm dünnen, faser- und/oder füllstoffverstärkten Kunststoff mit einem Flächengewicht von ca. 3 kg/m² gefertigt ist. Die erfindungsgemässe Doppelboden-Anordnung führt aufgrund der Federwirkung der Luft zu einer verbesserten Schallisolation ausserhalb der Sandwich-Resonanz des Masse-Feder-Aufbaus.

Geeignete Materialien zur Bildung des erfindungsgemässen Schildes 11 lassen sich der folgenden Tabelle entnehmen:

| | Faser-Füllstoff in Gew.% | Faserart | Matrix | Gruppe | Dichte | Biege E-Modul in GPa |
|---|---|---|---|---|---|---|
| GMT | 20 | Glas | PP | Thermoplast | 1.03 | 2.9 |
| LFT | 20 | Glas | PP | Thermoplast | 1.03 | 2.9 |
| LFI | 20-25 | Glas | PUR | Duroplast | 0.5-1.15 | 2.0-5.5 |
| NMT | 30 | Grünflachs | PP | Duroplast | 1.02-1.03 | 3.5 |
| R-RIM | 20 | Glas | PUR | Duroplast | 1.2 | 1.2 |
| Spritzguss | 20 | Glas | PP | Thermoplast | 1.04 | 3.8 |
| SMC | 25 | Glas | UP-Harz | Duroplast | 1.7-2.0 | 8.5-14 |

Als besonders vorteilhaft erweist sich bei diesen Materialien deren hohe Steifigkeit und geringe Dichte. Weitere Dichtereduktionen können über andere, bzw. zusätzliche Füllstoffe erreicht werden, z.B. mittels Glashohlkugeln mit einer Partikelgrösse von 10 bis 200 µm und einer effektiven Dichte von 0.14 bis 0.70 g/cm³. Geeignete Faserfüllstoffe sind Aramit-, Kohle-, Hybrid-, Textil-, Glas-, Natur-, Polyamid-, Polyester- oder mineralische Fasern.

In einer bevorzugten Ausführungsform ist der Schild 11 mit Perforationen versehen, d.h. weist mindestens partiell eine Lochstruktur auf. Diese Perforationen können einen Durchmesser von 0.5 mm bis 3.00 mm, vorzugsweise 1.00 mm aufweisen und sind beispielsweise ca. 2.5 mm voneinander beabstandet. Um die offenporige Zwischenschicht 12 vor Feuchtigkeit und Nässe zu schützen wird vorteilhafterweise mindestens zwischen dem Schild 11 und der Zwischenschicht 12 eine dünne Kunststofffolie vorgesehen. Auf der Aussenseite des Schildes 11 kann auch eine offenporige Faseroder Teppichschicht aufgebracht werden, um einen zusätzlichen Steinschlag- und/oder Wasserschlagschutz zu bewirken. Eine derartige Faser- oder Teppichschicht verbessert auch das Luftströmungsverhalten an der Aussenseite des Schildes 11 (Haifisch-Haut-Prinzip). Ein derartig ausgestatteter Doppelboden eignet sich insbesondere auch für die Aussenverkleidung von Radkästen. Die akustische Wirksamkeit des erfindungsgemässen Doppelbodens kommt bei dieser Anwendung in besonderer Weise zum tragen.

In einer Weiterbildung dieser erfindungsgemässen Doppelboden-Anordnung ist auf der Innenseite 9 des Karosserieteils 2 ein konventionell aufgebautes, schallisolierendes Feder-Masse-System 14 vorgesehen. Dieses umfasst bei dieser Ausführungsform eine als Feder wirkende schalldissipierende, in der Dicke reduzierte poröse Schicht (weiche Leichtschaum-, Schwerschaum- bzw. Faservliesschicht) und eine als Masse wirkende leichte Schwerschicht 6. Oder es wird auf der Innenseite 9 des Karosserieteils 2 ein schallisolierendes und schallabsorbierendes Feder-Masse-System 14, analog dem in der WO98/18657 beschriebenen System, vorgesehen, bestehend aus einer als Feder wirkenden porösen Schicht 14 und einer als leichte Masse wirkenden mikroporösen Deckschicht 16.

In einer Weiterbildung dieser erfindungsgemässen Doppelboden-Anordnung ist auf der Innenseite 9 des Karosserieteils 2 ein konventionell aufgebautes, schalläbsorbierendes Feder-Masse-System 14 vorgesehen. Dieses umfasst bei dieser Ausführungsform eine als Feder wirkende Absorberschicht 15 (Leichtschaum-Schicht) und eine als Masse-Schicht wirkende, poröse Deck- oder Schwerschicht 16. Die erfindungsgemässe Doppelboden-Anordnung erlaubt es also, auf die üblicherweise verwendete Dämpfungsschicht 3 und Unterbodenbeschichtung 7 zu verzichten. Damit kann das Gewicht des akustisch wirksamen Aufbaus erheblich reduziert werden. Insbesondere wird also bei der innenliegenden Verkleidung 14 auf die schallisolierende Dämpfungsschicht 3 und bei der Aussenverkleidung 13 auf die Schutzbeschichtung 7 verzichtet. Dies führt zu Gewichtseinsparungen von mehr als 2 kg/m², ohne damit die akustische Wirkung einzuschränken, wie entsprechende Vergleichsmessungen bestätigen. Gleichzeitig lässt sich die Dicke der Innenaufbauten 14 verringern.

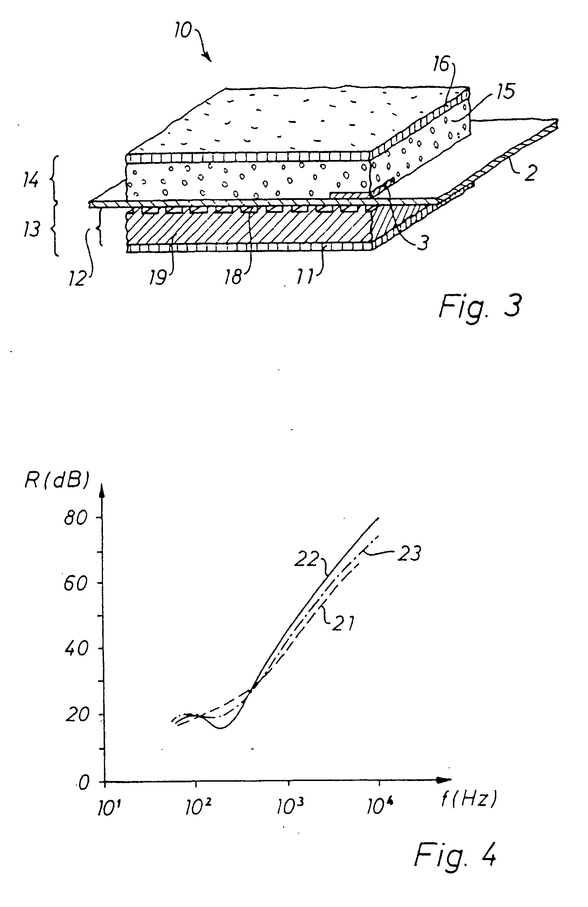

In einer bevorzugten Weiterbildung des erfindungsgemässen Fahrzeugbauteils, wie aus Figur 3 ersichtlich, umfasst die Zwischenschicht 12 einen elastischen PU-Schaum 19. Dieser Schaum 19 ist mit einem Profil versehen, welches an der Aussenseite 8 des Karosserieteils 2 anliegt und insbesondere vom Schild 11 an dieses Karosserieteil 2 gedrückt wird. Dadurch wird eine Schwingungsdämpfung des Karosserieteils 2 erzwungen. Die Profilierung dieses Schaums 19 führt zur Bildung einer zusammenhängenden Luftschicht 18 zwischen dem Karosserieteil 2 und der Schaumschicht 19, welche Luftschicht 18 in Wechselwirkung mit dem schwingenden Karosserieteil 2 zusätzlich dissipativ wirkt. Es versteht sich, dass diese Schaumschicht 19 sowohl vollflächig, wie auch partiell aufliegend eingesetzt werden kann. In einer besonderen Ausführungsform wird der Zwischenraum zwischen dem Schild 11 und dem Karosserieteil 2 nur partiell mit einer Zwischenschicht 12 versehen. Darüber hinaus versteht es sich, dass die Innenseite 9 des Karosserieteils 2 auch partiell mit einer Dämpfungsschicht 3 versehen sein kann.

Weiterbildungen des erfindungsgemässen Aufbaus sehen vor, anstelle eines konventionellen Feder-Masse-Systems 14 ein ultraleichtes Absorptionspaket zu verwenden. Derartige Absorptionspakete sind bspw. in der WO98/18657 beschrieben und weisen anstelle einer Schwerschicht 6, 16 eine mikroporöse Versteifungsschicht auf, welche einen totalen Luftströmungswiderstand von 500 Nsm⁻³ < Rₜ < 2500 Nsm⁻³ und eine Flächenmasse von 0.5kg/m² < m_{F} < 1.6kg/m² aufweist. Die Biegesteifigkeit einer solchen mikroporösen Versteifungsschicht beträgt dabei 0.005 Nm < B < 10.5 Nm.

Das in Figur 4 gezeigte Diagramm macht die akustische Wirksamkeit der unterschiedlichen Fahrzeugbauteile deutlich. Dabei zeigt die Kurve 22 das akustische Verhalten eines klassischen Aufbaus gemäss Figur 1. Der Verlauf dieser Kurve 22 zeigt im Bereich von 200 Hz ein charakterisches Isolationsminimum und macht deutlich, dass mit diesem schalldämpfenden Aufbau die Schallisolationswirksamkeit (Schalldämm-Mass R) bei höhereren Frequenzen im wesentlichen linear verläuft und bei ca. 10'000 Hz einen Wert von ca. 80 dB erreicht. Dieser Verlauf entspricht ziemlich genau dem akustischen Verhalten des erfindungsgemässen Doppelbodens in Kombination mit einem klassischen Feder-Masse-System. Demgegenüber zeigt die Kurve 21 das Schallisolationsverhalten des oben zitierten schallabsorbierenden, ultraleichten Isolationssystems (gemäss WO98/18657) auf einer klassischen Bodenblechausrüstung mit Unterbodenschutz und Dämpfungsbelag. Bei diesem besitzt die Schallisolationswirksamkeit R keinen Resonanzeinbruch und zeigt eine Verbesserung gegenüber der Konfiguration gemäss Kurve 22 von bis zu 10 dB in der Umgebung von ca. 200 Hz. Die Isolationswirksamkeit R der Konfiguration gemäss Kurve 21 steigt oberhalb von 500 Hz mit der - logarithmischen - Frequenz nahezu linear und mit etwas geringerer Steigung an. Das akustische Verhalten einer bevorzugten erfindungsgemässen Ausführungsform ist durch die Kurve 23 angedeutet. Bei dieser Ausführungsform ist der erfindungsgemässe Doppelboden mit einem ultraleichten Isolationssystem gemäss WO98/18657 kombiniert.

Die Vorteile des erfindungsgemässen Fahrzeugbauteils sind dem Fachmann unmittelbar ersichtlich. Insbesondere werden bei dem erfindungsgemässen Fahrzeugbauteil die schweren, schwingungsdämpfenden Schichten durch versteifende und schallabsorbierende Schichten ersetzt. Als besonders vorteilhaft erweist sich die durch das erfindungsgemässe Fahrzeugbauteil erzielte Reduktion der Schichtdicke im Bereich des Fahrzeugsfussraums. Es versteht sich von selbst, dass durch den Verzicht auf die schweren, schwingungsdämpfenden Schichten, die erfindungsgemässe Anordnung kostengünstiger ist als konventionelle Isolationssysteme. Als besonders vorteilhaft erweist sich die Aussengeräuschminderung in Radkästen wegen der verbesserten Schallisolationswirkung. Gleichzeitig dient die vorliegende Anordnung einem verbesserten Korrosionsschutz und kann mit dieser Anordnung ein geringerer CW-Wert erreicht werden, wenn diese Doppelboden-Anordnung aussenseitig mit einer Oberflächenstruktur (Teppich- oder Golfballstruktur) versehen wird.

Weiterbildungen der erfindungsgemässen Doppelboden-Anordnung und geeignete Kombinationen mit anderen schallwirksamen Systemen bekannter Art liegen im Bereich des fachmännischen Könnens und werden hier nicht näher erläutert. Es versteht sich, dass die erfindungsgemässe Doppelboden-Anordnung nicht nur am Fahrzeugboden oder im Radkasten eingesetzt werden kann, sondern ebenso gut zur Motorkapselung dienen kann.

## Patentansprüche

1. Fahrzeugbauteil mit einem Karosserieteil (2) und einem akustisch wirksamen Aufbau, wobei der akustisch wirksame Aufbau eine Aussenverkleidung (13) aufweist, welche ein durch eine Zwischenschicht (12) vom Karosserieteil (2) beabstandetes Schild (11) umfasst, **dadurch gekennzeichnet, dass** der Schild (11) ein Biege E-Modul von 1 bis 15 GPa, vorzugsweise von 1 bis 6 GPa und eine Dichte von 0.3 bis 2.5 g/cm³ aufweist.

2. Fahrzeugbauteil nach Anspruch 1, **dadurch gekennzeichnet, dass** dieses Schild (11) aus einem versickten Blech, aus einem faserverstärkten Thermoplast oder aus einem faserverstärktem Duroplast besteht.

3. Fahrzeugbauteil nach Anspruch 2, **dadurch gekennzeichnet, dass** die Zwischenschicht (12) eine Schaumschicht (19) umfasst, welche mindestens partiell am Karosserieteil (2) anliegt.

4. Fahrzeugbauteil nach Anspruch 3, **dadurch gekennzeichnet, dass** die Schaumschicht (19) mindestens partiell eine Oberflächenstruktur aufweist, welche am Karosserieteil (2) anliegt.

5. Fahrzeugbauteil nach einem der Ansprüche 1 bis 4, **dadurch gekennzeichnet, dass** der Schild (11) mindestens partiell gelocht ist.

6. Fahrzeugbauteil nach einem der Ansprüche 1 bis 5, **dadurch gekennzeichnet, dass** zwischen dem Schild (11) und der Zwischenschicht (12) eine wasserundurchlässige Folie angeordnet ist.

7. Fahrzeugbauteil nach einem der Ansprüche 1 bis 5, **dadurch gekennzeichnet, dass** die Schaumschicht (19) eine wasserundurchlässige Hülle aufweist.

8. Fahrzeugbauteil nach einem der Ansprüche 1 bis 7, **dadurch gekennzeichnet, dass** das Karosserieteil (2) eine akustisch wirksame Innenverkleidung (14) aufweist.

9. Fahrzeugbauteil nach Anspruch 8, **dadurch gekennzeichnet, dass** die Innenverkleidung (14) ein Feder-Masse-System umfasst.

10. Fahrzeugbauteil nach Anspruch 8, **dadurch gekennzeichnet, dass** die Innenverkleidung (14) einen ultraleichten Absorptions-/Isolationsaufbau mit einer mikroporösen Versteifungsschicht umfasst.

11. Fahrzeugbauteil nach einem der Ansprüche 1 bis 10, **dadurch gekennzeichnet, dass** das Karosserieteil (2) innenseitig mindestens partiell mit einer Dämpfungsschicht (3) versehen ist.

12. Aussenverkleidung für ein Fahrzeugbauteil gemäss Anspruch 1 mit einem Schild (11), welches ein Biege E-Modul von 1 bis 15 GPa, vorzugsweise von 1 bis 6 GPa und eine Dichte von 0.3 bis 2.5 g/cm³ aufweist.

13. Aussenverkleidung nach Anspruch 12, **dadurch gekennzeichnet, dass** das Schild (11) aus einem versickten Blech, aus einem faserverstärkten Thermoplast oder aus einem faserverstärktem Duroplast besteht.

14. Aussenverkleidung nach Anspruch 13, **dadurch gekennzeichnet, dass** das Schild (11) Karosserie-seitig eine Schaumschicht (19) umfasst, welche mindestens partiell am Karosserieteil (2) anlegbar ist.

15. Aussenverkleidung nach Anspruch 14, **dadurch gekennzeichnet, dass** die Schaumschicht (19) mindestens partiell eine Oberflächenstruktur aufweist, welche am Karosserieteil (2) anlegbar ist.

16. Aussenverkleidung nach einem der Ansprüche 12 bis 15, **dadurch gekennzeichnet, dass** der Schild (11) mindestens partiell gelocht ist.

17. Aussenverkleidung nach einem der Ansprüche 12 bis 16, **dadurch gekennzeichnet, dass** zwischen dem Schild (11) und der Schaumschicht (19) eine wasserundurchlässige Folie angeordnet ist.

18. Aussenverkleidung nach einem der Ansprüche 12 bis 16, **dadurch gekennzeichnet, dass** die Schaumschicht (19) eine wasserundurchlässige Hülle aufweist.

## Claims

1. Vehicle component with a body part (2) and an acoustically active structure, where the acoustically active structure has an outer cover (13) which comprises a shield (11) spaced from the body part (2) by an intermediate layer (12), **characterised in that** the shield (11) has a bending elasticity modulus of 1 to 15 GPa, preferably from 1 to 6 GPa, and a density from 0.3 to 2.5 g/cm³.

2. Vehicle component according to claim 1, **characterised in that** this shield (11) consists of a beaded panel, a fibre-reinforced thermoplastic or a fibre-reinforced thermoset.

3. Vehicle component according to claim 2, **characterised in that** the intermediate layer (12) comprises a foam layer (19) which lies at least partially on the body part (2).

4. Vehicle component according to claim 3, **characterised in that** the foam layer (19) has at least partially a surface structure which lies on the body part (2).

5. Vehicle component according to any of claims 1 to 4, **characterised in that** the shield (11) is at least partially perforated.

6. Vehicle component according to any of claims 1 to 5, **characterised in that** between the shield (11) and the intermediate layer (12) is arranged a water- impermeable film.

7. Vehicle component according to any of claims 1 to 5, **characterised in that** the foam layer (19) has a water-impermeable sleeve.

8. Vehicle component according to any of claims 1 to 7, **characterised in that** the body part (2) has an acoustically active interior lining (14).

9. Vehicle component according to claim 8, **characterised in that** the interior lining (14) has a spring-mass system.

10. Vehicle component according to claim 8, **characterised in that** the interior lining (14) has an ultralight absorption/insulation structure with a microporous stiffening layer.

11. Vehicle component according to any of claims 1 to 10, **characterised in that** the body part (2) is fitted on the inside at least partially with a damping layer (3).

12. Outer cover for a vehicle component according to claim 1 with a shield (11) which has a bending elasticity modulus of 1 to 15 GPa, preferably from 1 to 6 GPa, and density from 0.3 to 2.5 g/cm³.

13. Outer cover for a vehicle component according to claim 12, **characterised in that** the shield (11) consists of a beaded plate, a fibre-reinforced thermoplastic or a fibre-reinforced thermoset.

14. Outer cover according to claim 13, **characterised in that** the shield (11) has on the body part side a foam layer (19) which can lie at least partially on the body part (2).

15. Outer cover according to claim 14, **characterised in that** the foam layer (19) has at least partially a surface structure which can lie on the body part (2).

16. Outer cover according to any of claims 12 to 15, **characterised in that** the shield (11) is at least partially perforated.

17. Outer cover according to any of claims 12 to 16, **characterised in that** between the shield (11) and the foam layer (19) is arranged a water-impermeable film.

18. Outer cover according to any of claims 12 to 16, **characterised in that** the foam layer (19) has a water-impermeable sleeve.

## Revendications

1. Composant de véhicule comportant une partie de carrosserie (2) et une structure à efficacité acoustique, la structure à efficacité acoustique comportant un revêtement externe (13), englobant un panneau (11) espacé de la partie de la carrosserie (2) par une couche intermédiaire (12), **caractérisé en ce que** le panneau (11) présente un module d'élasticité à la flexion compris entre 1 à 15 GPa, de préférence entre 1 et 6 GPa et une densité comprise entre 0,3 et 2,5 g/cm².

2. Composant de véhicule selon la revendication 1, **caractérisé en ce que** ce panneau (11) est composé d'une tôle sertie, d'une matière thermoplastique renforcée de fibres ou d'une résine thermodurcissable renforcée de fibres.

3. Composant de véhicule selon la revendication 2, **caractérisé en ce que** la couche intermédiaire (12) englobe une couche de mousse (19), appliquée au moins partiellement sur la partie de carrosserie (2).

4. Composant de véhicule selon la revendication 3, **caractérisé en ce que** la couche de mousse (19) comporte au moins en partie une structure de surface, appliquée sur la partie de carrosserie (2.

5. Composant de véhicule selon l'une des revendications 1 à 4, **caractérisé en ce que** le panneau (11) est au moins partiellement perforé.

6. Composant de véhicule selon l'une des revendications 1 à 5, **caractérisé en ce qu'**une feuille imperméable à l'eau est agencée entre le panneau (11) et la couche intermédiaire (12).

7. Composant de véhicule selon l'une des revendications 1 à 5, **caractérisé en ce que** la couche de mouse (19) comporte une enveloppe imperméable à l'eau.

8. Composant de véhicule selon l'une des revendications 1 à 7, **caractérisé en ce que** l'élément de carrosserie (2) comporte un revêtement interne à efficacité acoustique (14).

9. Composant de véhicule selon la revendication 8, **caractérisé en ce que** le revêtement interne (14) englobe un système de ressort-masse.

10. Composant de véhicule selon la revendication 8, **caractérisé en ce que** le revêtement interne (14) englobe une structure d'absorption/d'isolation ultralégère avec une couche de renforcement microporeuse.

11. Composant de véhicule selon l'une des revendications 1 à 10, **caractérisé en ce que** le côté interne de l'élément de carrosserie (2) et revêtu au moins partiellement d'une couche d'amortissement (3).

12. Revêtement externe pour un composant de véhicule selon la revendication 1, comportant un panneau (11) présentant un module d'élasticité à la flexion compris entre 1 à 15 GPa, de préférence entre 1 et 6 GPa et une densité comprise entre 0,3 et 2,5 g/cm².

13. Revêtement externe selon la revendication 12, **caractérisé en ce que** le panneau (11) est composé d'une tôle sertie, d'une matière thermoplastique renforcée de fibres ou d'une résine thermodurcissable renforcée de fibres.

14. Revêtement externe selon la revendication 13, **caractérisé en ce que** le panneau (11) comporte du côté de la carrosserie une couche de mousse (19), pouvant être appliquée au moins partiellement sur la partie de carrosserie (2).

15. Revêtement externe selon la revendication 14, **caractérisé en ce que** la couche de mousse (19) comporte au moins en partie une structure de surface pouvant être appliquée sur la partie de carrosserie (2).

16. Revêtement externe selon l'une des revendications 12 à 15, **caractérisé en ce que** le panneau (11) est au moins partiellement perforé.

17. Revêtement externe selon l'une des revendications 12 à 16, **caractérisé en ce qu'**une feuille imperméable à l'eau est agencée entre le panneau (11) et la couche de mousse (19)

18. Revêtement externe selon l'une des revendications 12 à 16, **caractérisé en ce que** la couche de mouse (19) comporte une enveloppe imperméable à l'eau.
